# DEMANDE DE BREVET EUROPEEN

(11) **EP 0 913 611 A1**
(43) Date de publication de la demande: **06.05.1999**
(21) Numéro de dépôt: 97203403.7
(22) Date de dépôt: 03.11.1997
(51) Int. Cl.: F16L 1/00, F16L 25/00, F16L 37/02, F16L 41/02

(54) **Dispositif de raccord pour tuyaux en matière plastique**

(71) Demandeur: Wirquin Plastiques S.A., 44470 Carquefou (FR)
(72) Inventeur: Le Coent, Daniel, F-44470 Carquefou (FR)
(74) Mandataire: Arbousse-Bastide, Jean-Claude Philippe

(57) **Abrégé**

Dispositif de raccord pour tuyaux en matière plastique.

Il comporte au moins deux manchons (1) destinés à être emmanchés chacun sur une extrémité des tuyaux à raccorder, et reliés par au moins une partie intermédiaire flexible (2).

## Description

La présente invention a pour objet un dispositif de raccord pour tuyaux en matière plastique, utilisés pour l'évacuation des eaux usées dans le domaine du sanitaire, et pour la collecte des eaux de pluie.

Actuellement, une tuyauterie d'évacuation est réalisée par assemblage de tuyaux réalisés en matière plastique, plus particulièrement du polychlorure de vinyle (PVC).

Les tuyaux sont assemblés par emmanchement soit les uns dans les autres, dans ce cas ils comportent une extrémité mâle et une extrémité femelle, soit par l'intermédiaire de raccords coudés, également réalisés en PVC, et solidarisés aux tuyaux par collage.

Il existe de nombreux types de raccord coudé, qui se différencient, outre par leur diamètre, d'une part par un angle, et d'autre part par leurs manchons de raccordement qui sont soit femelle, soit mâle, et cela dans toutes les combinaisons possibles.

Lorsqu'il s'agit de raccorder deux tuyaux faisant entre-eux un angle particulier, il est souvent nécessaire d'utiliser plusieurs raccords, et ce d'autant plus si le raccordement doit être effectué dans les trois dimensions.

Un raccordement en angle nécessite souvent d'être réalisé de manière pragmatique, en essayant successivement d'assembler des raccords de types différents jusqu'à obtenir la configuration adéquate.

Le raccordement de tuyaux au moyen des raccords existants présente donc l'inconvénient d'être parfois relativement longue, et de nécessiter d'avoir à disposition de nombreux types de raccords.

D'autre part, il est fréquent d'avoir à raccorder deux tuyaux à un seul, on utilise alors un raccord en forme de Y comportant trois manchons, ce qui augmente les difficultés de raccordement, surtout qu'en il faut de plus réaliser un angle.

La présente invention a pour but de remédier à ces divers inconvénients en proposant un dispositif de raccord permettant de raccorder des tuyaux s'étendant selon des axes différents, quels que soient lesdits axes.

Le dispositif de raccord objet de la présente invention se caractérise essentiellement en ce qu'il comporte au moins deux manchons destinés à être emmanchés chacun sur une extrémité des tuyaux à raccorder, et reliés par au moins une partie intermédiaire flexible.

Selon une caractéristique additionnelle du dispositif selon l'invention, l'un des manchons est solidarisé à au moins deux parties intermédiaires flexibles, à l'autre extrémité de chacune desquelles est solidarisé un manchon.

Selon une autre caractéristique additionnelle du dispositif selon l'invention que chacune des parties intermédiaires flexibles consiste en un tuyau de structure annelée.

Selon une autre caractéristique additionnelle du dispositif selon l'invention, les manchons sont réalisés en PVC, tandis que la ou les parties intermédiaires flexibles sont réalisées en polypropylène.

La présente invention permet ainsi de raccorder deux ou plusieurs tuyaux non alignés, de manière aisée et rapide au moyen d'un seul raccord.

Les avantages et les caractéristiques de la présente invention ressortiront plus clairement de la description qui suit et qui se rapporte au dessin annexé, lequel en représente plusieurs modes de réalisation non limitatifs.
- la figure 1 représente une vue en perspective d'un premier mode de réalisation du dispositif de raccord selon l'invention.
- la figure 2 représente une vue en coupe longitudinale d'une partie du même dispositif.
- la figure 3 représente une vue en plan d'une autre partie du même dispositif.
- la figure 4 représente une vue en perspective d'une variante du même dispositif.
- la figure 5 représente une vue en perspective d'une autre variante du même dispositif.

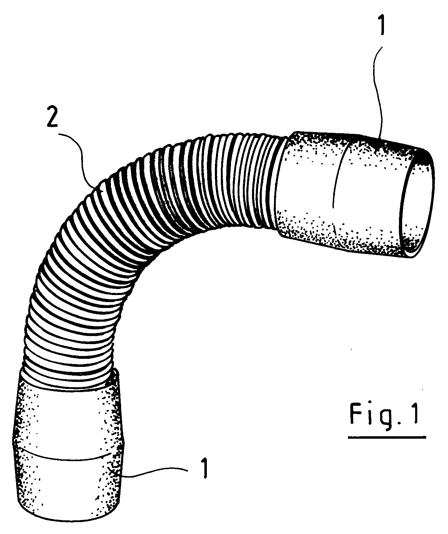

Si on se réfère à la figure 1, on peut voir qu'un dispositif de raccord selon l'invention comporte deux manchons 1 reliés par un tuyau 2 de structure annelée.

Si on se réfère également à la figure 2, on peut voir qu'un manchon 1 comporte intérieurement dans sa région médiane une nervure périphérique 10 faisant saillie de la paroi interne 11, et délimitant l'espace intérieur en deux parties, et constituant la limite d'emmanchement du tuyau 2, lequel est solidarisé par surmoulage, et la limite d'emmanchement du tuyau à raccorder, non représenté.

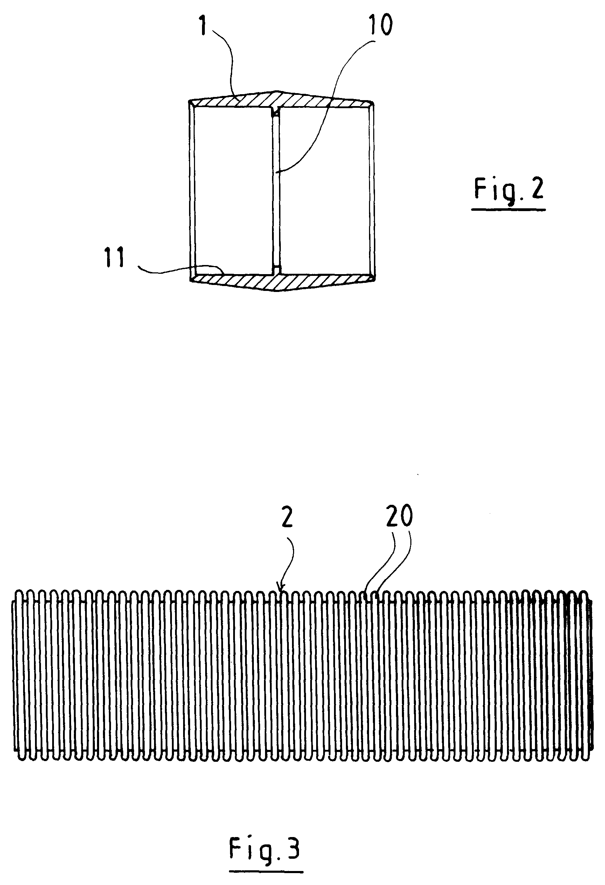

Si on se réfère maintenant à la figure 3 on peut voir plus en détail la structure du tuyau 2, lequel comporte, de façon connu en soi, une succession d'anneaux 20 lui donnant une certaine élasticité dans toute les directions.

Le dispositif selon l'invention permet de raccorder des tuyaux s'étendant selon des axes différents, il permet également, outre de décrire tous les angles possibles dans les trois dimensions, de raccorder deux tuyaux dont l'alignement n'est pas parfait.

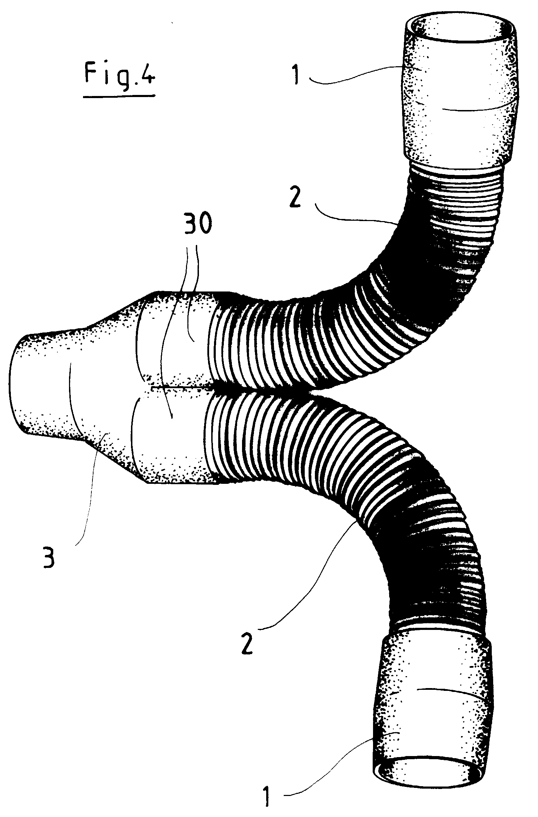

Si on se réfère maintenant à la figure 4, on peut voir que selon une variante du dispositif selon l'invention, permettant le raccordement de deux tuyaux à un seul.

Cette variante du dispositif selon l'invention comporte ainsi un manchon 3 qui présente une extrémité à deux embouchures 30 permettant la solidarisation de deux tuyaux 2, lesquels comportent chacun à leur autre extrémité un manchon 1.

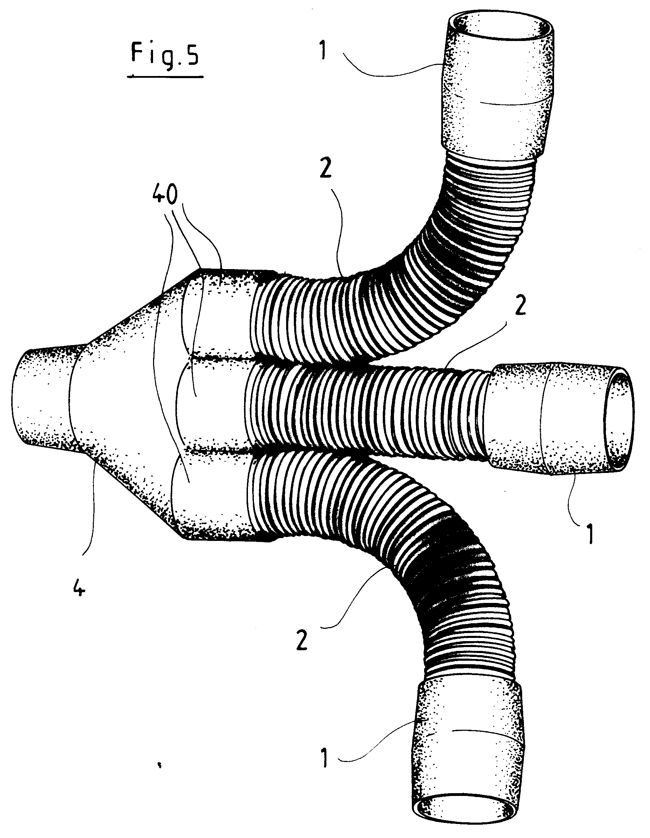

De même, en référence à la figure 5, on peut voir une autre variante du dispositif selon l'invention, permettant de raccorder trois tuyaux à un seul, qui comporte un manchon 4 à trois embouchres 40 dans chacune desquelles est introduit un tuyau 2.

Les deux variantes précitées permettent de raccorder rapidement plusieurs tuyaux tout en autorisant un écart angulaire.

Le dispositif de raccord selon l'invention permet un gain de temps lors de la pose d'une tuyauterie d'évacuation.

De plus, le nombre de raccords différents nécessaires à la réalisation d'une installation d'évacuation d'eaux usées ou de collecte d'eaux de pluie, est considérablement diminué.

## Revendications

1. Dispositif de raccord pour tuyaux en matière plastique, caractérisé en ce qu'il comporte au moins deux manchons (1, 3, 4) destinés à être emmanchés chacun sur une extrémité des tuyaux à raccorder, et reliés par au moins une partie intermédiaire flexible (2).

2. Dispositif selon la revendication 1 caractérisé en ce que l'un des manchons (3, 4) est solidarisé à au moins deux parties intermédiaires flexibles (2) à l'autre extrémité de chacune desquelles est solidarisé un manchon (1).

3. Dispositif selon la revendication 1 ou la revendication 2 caractérisé en ce que chacune des parties intermédiaires flexibles (2) consiste en un tuyau de structure annelée.

4. Dispositif selon l'une quelconque des revendications précédentes caractérisé en ce qu'un manchon (1) comporte intérieurement dans sa région médiane une nervure périphérique (10) délimitant l'espace intérieur en deux parties, et constituant la limite d'emmanchement de la partie intermédiaire flexible (2), laquelle y est solidarisée par surmoulage, et la limite d'emmanchement du tuyau à raccorder.

5. Dispositif selon l'une quelconque des revendications précédentes caractérisé en ce que les manchons (1, 3) sont réalisés en polychlorure de vinyle, tandis que la ou les parties intermédiaires flexibles (2) sont réalisées en polypropylène.
